# EUROPÄISCHE PATENTSCHRIFT

(11) **EP 2 071 279 B1**
(45) Veröffentlichungstag und Bekanntmachung des Hinweises auf die Patenterteilung: **03.10.2018**
(21) Anmeldenummer: 08171575.7
(22) Anmeldetag: 12.12.2008
(51) Int. Cl.: G01B 11/25, G01B 21/04

(54) **Verfahren und Vorrichtung zur Erfassung von Körpermaßdaten und Konturdaten eines Festkörpers**
Method and device for recording measurements of bodies and contour data of a solid body
Procédé et dispositif de détermination de données de mesure de corps et données de contour d'un corps solide

(30) Priorität: 12.12.2007 AT 20092007
(43) Veröffentlichungstag der Anmeldung: 17.06.2009
(73) Patentinhaber: NextSense Mess- und Prüfsysteme GmbH, 8020 Graz (AT)
(72) Erfinder: Niel, Albert, 8047 Graz (AT); Kaufmann, Peter, 8051 Graz (AT); Deutschl, Edwin, 8010 Graz (AT); Gasser, Clemens, 8045 Graz (AT)
(74) Vertreter: Wirnsberger, Gernot

(56) Entgegenhaltungen:
- US-A- 6 128 086
- US-A1- 2002 162 886
- US-A1- 2007 052 974
- US-B1- 6 542 249
- MARTIN LABRIE ET AL: "Efficient camera motion and 3D recovery using an inertial sensor" COMPUTER AND ROBOT VISION, 2007. CRV '07. FOURTH CANADIAN CONFERE NCE ON, IEEE, PI, 1. Mai 2007 (2007-05-01), Seiten 55-62, XP031175788 ISBN: 978-0-7695-2786-4

## Beschreibung

Die Erfindung betrifft ein Verfahren gemäß dem Oberbegriff des Patentanspruchs 1 sowie eine Vorrichtung zur Durchführung des Verfahrens.

Optische Konturerfassungsgeräte nach dem Schattenwurfprinzip oder dem Lichtschnittverfahren nutzen die Triangulation von Körperkonturpunkten oder -linien. Beim Laserlichtschnittverfahren beispielsweise dient ein linienförmiges Laserlichtstrahlenband zur Beleuchtung einer ausgewählten Konturlinie eines Messkörpers (in der Lichtschnittebene) und eine lichtempfindliche Sensorfläche, vorzugsweise ein Bildsensor auf Basis CMOS (Complementary Metal Oxide Semiconductor) oder CCD (Charged-coupled Device) mit n mal m Bildpunkten, zur Erfassung diffusen Reflexionslichtes von einer zur Strahlenachse des Laserlichtes im Triangulationswinkel versetzten Position. Trigonometrische Beziehungen von Winkeln von Messdreiecken (Lichtquelle(n), Reflexionspunkte, Sensor) und Position und Orientierung von Lichtquelle(n) und Sensorfläche zueinander erlauben eine dreidimensionale Berechnung erfasster Koordinaten. So wird ein Lichtband, das auf eine ebene Fläche fällt, auf der Sensorfläche als Gerade abgebildet, Krümmungen oder Wölbungen als gebogene Kurven und Knicke als Winkel. Zur Erfassung unterschiedlicher Lichtschnitte werden mehrere Lichtbänder parallel und auch normal dazu angeordnet. Nahezu alle bekannten Verfahren erfassen somit durch ein kalibriertes System durch Aufhellung oder Abdunklung einzelner Punkte oder Linien einer Körperoberfläche die zugehörigen Koordinatenpunkte in x-, y- und z-Richtung in Bezug auf ein kartesisches Koordinatensystem unter Berücksichtigung der optischen Verzerrung durch die Zentralprojektion. Gemeinsam ist diesen bekannten Verfahren ein hoher Aufwand für eine Ausrichtung, für Kalibrierung und für Positionierung eines Messobjektes gegenüber einer Messvorrichtung. Viele Messpunkte müssen eindeutig erfasst werden, um ein gesamtes Bild eines Messobjektes zu erhalten. Oft werden nur einzelne Gitterpunkte aufgenommen und zwischen diesen im (Rechen-)Modell interpoliert. Die Genauigkeit einer dreidimensionalen Erfassung ist folglich von der Anzahl der eindeutig erfassten Messpunkte abhängig, wobei jeder Messpunkt mit der Genauigkeit des Messsystems erfasst ist. Um gute Ergebnisse zu erzielen, wird eine Erfassungseinrichtung (3D-Scanner) auf Führungseinrichtungen um das Messobjekt mit eindeutig zugeordneten Koordinaten in einem genau definierten Messraum positioniert. Eine handgeführte und vage positionierbare Vorrichtung für eine dreidimensionale Messung ist gemäß diesem Stand der Technik nicht möglich, da die erforderliche Positionsgenauigkeit nicht reicht, hinreichende Messergebnisse zu erzielen. Unkenntnis über exakte Abstände eines Messobjektes zur Erfassungseinrichtung bzw. zum Messgerät, eine nicht erfasste Orientierung des Messobjektes relativ zum Messgerät sowie die Schwierigkeit, mehrere diskrete Messungen um das Messobjekt herum richtig bzw. passend und exakt einander in einem gemeinsamen Raum zuzuordnen, steht brauchbaren diesbezüglichen Messgeräten entgegen.

In der US 6,542,249 B1 ist eine Messvorrichtung und ein Verfahren zur berührungslosen Vermessung von Oberflächenformen beschrieben, wobei mittels Lichtlinienprojektor und Kamera sowie einem Computer über ein Lichtschnittverfahren eine Form eines Messobjektes ermittelt wird. Hierbei werden mindestens drei Linien projiziert und über eine Kamera erfasst; eine genaue Kalibrierung erlaubt die Erfassung des Abstandes eines Messobjektes zur Messvorrichtung sowie der Form der Oberfläche in den Lichtschnittlinien. Dabei wird eine Vielzahl von Messpunkten zur Rekonstruktion mithilfe von mathematischen Beziehungen erfasst. Um die gesamte Oberfläche zu erhalten, werden Überlappungen aus unterschiedlichen Erfassungslagen verwendet, die gegeneinander translatorisch und/oder rotatorisch verschoben werden, wodurch eine Rekonstruktion der Gesamtoberfläche auch ohne zusätzliche Positionsmessmittel möglich sein soll. Eine Weiterverarbeitung von Messdaten erlaubt es, gewisse Formeigenschaften zu ermitteln. Nachteilig hierbei ist ein erforderlich hoher Aufwand für eine Erfassung einer dreidimensionalen Form, auch wenn nur wenige Objektdaten gesucht werden. Zudem muss eine Überlappung der Erfassungslagen so erfolgen, dass Mehrdeutigkeiten aufgrund ähnlicher Oberflächengestaltung ausgeschlossen werden können bzw. muss der Messablauf, also die Reihenfolge der Messungen um das Messobjekt, protokolliert werden, um Fehler zu vermeiden. Eine automatisierte Positions- und Orientierungsausrichtung ist nur durch hohen Rechenaufwand möglich.

In der US 2003/0160974 A1 ist eine Vorrichtung und ein Verfahren beschrieben, wobei speziell ein Durchmesser von zylindrischen Objekten mithilfe eines Lichtschnittverfahrens erfasst wird. Nachteilig an diesem Verfahren ist die Einschränkung auf rein zylindrische Objekte und nur eine Kenngröße, nämlich den Radius.

In der GB 2 328 280 A ist ein Scanner zur Erfassung von Größe, Form und anderen 3D-Oberflächeneigenschaften eines Messobjektes offenbart. Dabei werden von Kamerabildern aus verschiedenen Betrachtungspositionen korrespondierende Punkte ermittelt und daraus eine 3D-Zuordnung dieser Punkte im Raum errechnet. Eine Parallaxe lässt eine Tiefeninformation neben den Höhen- und Breitendaten aus den Kamerabildern ermitteln. Neben Projektion von Mustern ist auch der Einsatz eines Inertialsensors vorgesehen, um eine Zuordnung identischer Punkte zu erleichtern.

In der GB 2 292 605 A ist ein 3D-Oberflächenscanner offenbart, mit dem eine Erfassung von Lichtschnitten über eine optische Sensorfläche möglich ist, wobei eine Lichtstrahlebene mittels eines rotierenden Spiegels über eine Körperoberfläche gelenkt wird. Dadurch wird eine Vielzahl von Lichtschnitten erzeugt, welche eine der Sensorfläche zugewandte Seite eines Messobjektes mathematisch als 3D-Modell erfassen. Ein Inertialsensorsystem erfasst eine Orientierung und Position des Scanners gegenüber dem Messobjekt, wodurch dieses von allen Seiten erfasst und das Messobjekt allseitig aus einer Vielzahl von Lichtschnitten mathematisch rekonstruiert werden kann. Nachteilig ist der erhebliche Aufwand zur Erfassung eines gesamten Messobjektes bzw. dessen Oberfläche, auch wenn nur einige wenige Körpereigenschaften zu ermitteln sind. Durch den rotierenden Spiegel ergibt sich zudem das Problem einer Verwacklung während einer Bilddatenerfassung.

In der AT 501 507 A1 ist eine Vorrichtung und ein Verfahren zur mobilen berührungslosen Erfassung sowie Ermittlung und Auswertung von Messobjekten mit speziellen Körperkonturen beschrieben. Dabei wird mithilfe von mindestens zwei Strahlenflächen und einem Strahlendetektor, mit bekannter Raumorientierung der Strahlenflächen und des Strahlendetektors zueinander, aus erfassten Schnittliniendaten eine Kontur um eine charakterisierende Vorzugsschnittfläche errechnet. Hierfür wird eine bekannte geometrische Gesetzmäßigkeit in der Oberfläche des Körpers in einer Raumrichtung berücksichtigt. Nachteilig bei letzterem Verfahren, dass eine Zusammensetzung mehrerer Messungen an der Objektvorderseite und der Objektrückseite nicht immer eindeutig möglich ist, da die Orientierung des Messgerätes gegenüber einem Messobjekt nicht miterfasst ist. Mehrdeutigkeiten im Oberflächenverlauf liefern mehrere Zuordnungsmöglichkeiten in Bezug auf das Messobjekt. Die Form muss in einer Raumrichtung eine bekannte geometrische Gesetzmäßigkeit aufweisen. Nur eine Vorzugsschnittfläche ist erfassbar.

Basierend auf dem Stand der Technik ist es Aufgabe der Erfindung, ein Verfahren und eine Vorrichtung der eingangs genannten Art anzugeben, sodass geometrische Größen eines oder mehrerer Messobjekte wie Profilformen, Spaltbreiten, Versatz oder dreidimensionale Körperformen auf einfache und sichere Weise verglichen werden können, ohne dazu jeden Körperpunkt aufnehmen zu müssen. Teilkonturen oder vollständige Umlaufkonturen sollen eindeutig und mit hoher Genauigkeit erfasst werden können. Das Verfahren bzw. die Vorrichtung soll bei handgeführter Aufnahme bzw. Betätigung mit niedrigem Positionieraufwand durch den Benutzer rasche, aber genaue Messungen erlauben. Dadurch sollen komplizierte Vermessungen von Messobjekten auch im verbauten Zustand vereinfacht werden. Erfasste Daten sollen vorzugsweise gespeichert und einer EDV-Anlage zuführbar gemacht werden.

Zur verfahrensmäßigen Lösung der Aufgabenstellung wird ein Verfahren zur mobilen optischen Erfassung von Oberflächendaten gemäß Patentanspruch 1 vorgeschlagen. Die Oberflächendaten werden aus der Gesamtheit aller fernoptisch erfassbaren Oberflächenpunkte eines oder mehrerer Festkörper bzw. Messobjekte ausgewählt. Diese selektiven Oberflächendaten gehören Raumkurven oder Teilen davon an, können folglich punktuell oder linienartig gebildet sein. Durch Aufnahme und Verarbeitung mehrerer solcher Raumkurven bzw. Raumkurventeile rund um einen zu vermessenden Körper und deren lagerichtige Kombination kann ein Auszug an Oberflächendaten gewonnen werden. Ein solcher Auszug sollte geeignet sein, den Körper zu charakterisieren, bildlich nachzubilden oder mit bestimmten Solldaten zu vergleichen.

Zur Aufnahme der Oberflächendaten dient eine lichtempfindliche Sensorfläche, auf welcher sequenziell zweidimensionale Abbilder abgebildet werden. Zweckmäßig geschieht dies durch Zentralprojektion. Durch das erfindungsgemäße Verfahren wird dabei für jeden Punkt oder einige Punkte dieser Raumkurven ein Vektor bestimmt, dessen Orientierung orthogonal auf ein um den Punkt liegendes Flächeninkrement ist.

Zusätzlich wird die Position und die Orientierung der Sensorfläche gegenüber dem Festkörper zum Zeitpunkt der Erfassung jedes zweidimensionalen Abbildes in grober Genauigkeit ermittelt. Dies erlaubt ein grobes Zusammenfügen der zweidimensionalen Abbilder.

Aufgrund von nur mit eingeschränkter Genauigkeit vorliegenden Positions- und Orientierungsdaten erfolgt in einem weiteren Schritt eine iterative Annäherung von identischen Kurvenpunkten aus unterschiedlichen Erfassungspositionen und/oder -orientierungen. Diese identischen Kurvenpunkte werden aus den nächstliegenden Punkten der grob positionierten bzw. zusammengefügten Daten ermittelt oder anhand eindeutiger Kurvenmerkmale identifiziert. Dabei werden fehlerbedingte Abstände eigentlich identischer Punktdaten minimiert. Ebenso werden fehlerbedingte Verdrehungen der diesen Punktdaten zugehörigen Normalvektoren durch eine Orientierungskorrektur parallelisiert. Alle zugehörigen Daten (aus gleicher Erfassungslage) werden mitmanipuliert, sodass die zugehörige Oberflächenkurve oder Punktverteilung in eine geeignete Lage verschoben und gedreht wird.

Anhand der ermittelten Korrekturdaten kann eine Genauigkeit der relativen Positions- und Orientierungsdaten der Sensorfläche für nachfolgende Erfassungen erhöht werden. Ein Feedback der optisch erfolgten Fehlerkorrektur kann zur Verbesserung der Positions- und Orientierungsabschätzung dienen. Dies kann wichtig sein, da mit einer wechselseitigen Optimierung von Standortbestimmung und Kurvenlagenzuordnung eine erforderliche Messgenauigkeit für Produktion oder Analyse von Produkten erreichbar und gegebenenfalls überbietbar ist. Eine Positioniergenauigkeit identischer Punkte hängt von der Auflösung der Sensorfläche und einer Berechnungsgenauigkeit ab.

Zur Vermeidung von Mehrdeutigkeiten in der Auslegung möglicher identischer Kurvenpunkte ist es zweckmäßig, für das Verfahren Oberflächen zuzulassen, die im Erfassungsbereich von mehreren erfassten sequenziellen Aufnahmen derart gestaltet sind, dass die zweidimensionalen Abbilder jeder erfassten Kurve geeignet sind, die relative räumliche Position und Orientierung der Sensorfläche gegenüber dem Körper eindeutig zu bestimmen. Dazu dürfen im Umkreis von Kurvenmerkmalen keine weiteren verwechselbar gleichen Merkmale vorliegen, wobei ein Radius dieses Umkreises durch eine Genauigkeit der groben Orientierungs- und Positionsabschätzung gegeben ist. Bei Streckkörpern oder drehsymmetrischen Körpern oder zumindest Abschnitten davon reduzieren sich die Freiheitsgrade. Die Form solcher konstanten Querschnitte ist dann geeignet, die relative Position und Orientierung der Sensorfläche hinreichend genau zu bestimmen, wenn deren Kontur die Eindeutigkeitsbedingung für die Zuordenbarkeit von Teilstücken erfüllt.

Zur Bestimmung einer relativen Änderung der Position und Orientierung der Sensorfläche dient zweckmäßigerweise eine Messung örtlicher Beschleunigungen und Drehraten derselben. Beispielsweise liefern drei zueinander normale Beschleunigungen durch zweimalige Integration über die Zeit einen zurückgelegten Weg. Randbedingungen sind, dass Anfangsort und eine Geschwindigkeit bekannt sind. Eine Winkelgeschwindigkeit liefert über die Zeit integriert eine Winkellageänderung bezogen auf einen Ausgangswinkel.

Sind im Vorhinein bestimmte Regelmäßigkeiten des Messobjektes bekannt, so können diese genutzt werden, um Freiheitsgrade der Positions- oder Orientierungsdaten einzuschränken.

Es ist zweckmäßig, redundante Daten zu eliminieren oder durch ihre Mittelung Fehler zu minimieren, um Speicherbedarf und Rechenzeit zu verringern. So ist beispielsweise bei zylinderförmigen Objekten die Lage der Sensorfläche bzw. eines Sensors entlang einer Zylinderachse irrelevant. Eine Richtung der Zylinderachse kann als jene Richtung bestimmt werden, die normal auf alle vom Sensor ermittelten Normalvektoren steht. Messdaten können sodann in Richtung dieser Achse in eine beliebige normal zu dieser Achse liegende Ebene verschoben werden. Die in dieser Ebene entstandene Kurve dient als Erzeugende für eine Rekonstruktion des Zylinders.

Bei rotationssymmetrischen Objekten ist beispielsweise der Drehwinkel des Sensors um die Rotationsachse irrelevant. Die Drehachse kann dabei als jene Gerade ermittelt werden, die alle vom Sensor ermittelten Normalvektoren schneidet. Die Messdaten können sodann um diese Drehachse in eine beliebige von dieser Drehachse begrenzte Halbebene rotiert werden. Die in dieser Ebene entstandene Kurve dient als Erzeugende für die Rekonstruktion des Rotationskörpers. Wird beispielsweise ein Drehzylinder erfasst, so weist dieser in einer Richtung Körperabschnitte mit kreisförmigem Querschnitt auf. Beliebige Punkte auf der Oberfläche können um die Drehachse mit dem Zylinderradius in eine gemeinsame Ebene gedreht werden, die aus diesen Punkten gebildete Kurve ist dann eine Gerade parallel zur Zylinderachse.

Verzerrungen der zweidimensionalen Abbilder aufgrund der Abbildungsmethode können durch Kalibrierung erfasst und berücksichtigt werden. Dazu dienen Referenzpunkte oder Referenzlinien in bekannter Position und Orientierung zur lichtempfindlichen Sensorfläche.

Charakteristische, identifizierbare Merkmale der Oberfläche können vorteilhaft aus den erfassten Bilddaten gefiltert werden. Zur Bestimmung der Normalvektoren können die perspektivischen Verzerrungen oder die Änderungen dieser Verzerrungen bei Anvisierung aus unterschiedlichen Orten und/oder Winkellagen einer auf der Körperoberfläche identifizierbaren Kurve oder von Punktabständen benachbarter Punkte verwendet werden. Als erkennbare charakteristische Oberflächenmerkmale eignen sich besonders
i. zumindest Teile von Körperaußenkonturen,
ii. farblich unterschiedliche Oberflächenpunkte oder -linien,
iii. farblich unterschiedliche Flächenbereiche oder Flächenbereichsübergänge oder Kombinationen dieser Merkmale, welche zur Weiterverarbeitung aus den Daten gefiltert werden.

Daneben können charakteristische Merkmale aus Reflexions-Lichtintensitäts-Übergängen sowie Eigenschatten als Abbilder von Oberflächenkurven erzeugt werden, wobei eine lokale Lichtintensität aus der Form und Ausrichtung der Körperoberflächenbereiche oder aufgrund unterschiedlicher Oberflächenrauheit gegenüber einer vorzugsweise nicht frontal gerichteten Beleuchtungsquelle resultiert.

Neben passiv erfassbaren Körperlinien kann es vorteilhaft sein, Punkte oder Kurvenformen auf die Körperoberfläche zu projizieren. Somit werden diese Projektionen von Licht- oder Schattenkurven durch eine getroffene Körperoberfläche verzerrt. Die räumliche Position mindestens dreier benachbarter Oberflächenpunkte lässt sich durch Triangulation ermitteln. Dies erlaubt eine sehr genaue Ermittlung der Orientierung der zugehörigen (Flächen-)Normalvektoren.

Zur Durchführung des Verfahrens ist es zweckmäßig, eine Vorrichtung dazu vorzusehen, zweidimensionale Abbilder mindestens eines markierten oder markant vorliegenden Kurvenstückes oder punktuellen Teilen davon von Festkörperoberflächen zu filtern. Diese Vorrichtung besitzt eine Bildaufnahmeeinrichtung mit einer lichtempfindlichen Sensorfläche, zumindest eine Datenverarbeitungseinrichtung und zumindest einen Datenspeicher. Markante Kurvenstücke können z. B. bestimmte nicht dem Verschleiß unterliegende Rillen, Winkel oder Gravuren sein. Drei eindeutige, z. B. kreisförmige Aufkleber an drei vordefinierten Stellen können beispielsweise Eckpunkte eines gedachten Dreiecks markieren. Für die Verarbeitung der durch die Sensorfläche erfassten Daten ist zweckmäßigerweise ein Algorithmus im Programmcode der zumindest einen Datenverarbeitungseinrichtung vorgesehen, der
i) zumindest in identifizierbaren identischen Kurvenpunkten mindestens zweier Kurven aus unterschiedlichen Messzeitpunkten und unterschiedlichen hinreichend groben Orientierungs- und Positionslagen anhand der jeweiligen Kurvenverzerrungen Vektoren bestimmt, deren Orientierung orthogonal auf die um die Punkte zugehörigen Flächeninkremente ist, und
ii) durch iterative Minimierung von Abständen und Vektorwinkellagefehlern identischer Kurvenpunkte unterschiedlicher erfasster Kurven Translations- und Rotationskorrekturen für die Positions- und Orientierungsdaten bildet.

Eine Filtervorrichtung kann zweckmäßigerweise eine eine Öffnungszeit begrenzende Verschlusseinrichtung sein, sodass nur zu bestimmten Zeiten Informationen in Form von Licht auf die Sensorfläche gelangen. Dabei kann die Länge einer Verschlusszeit in Verbindung mit einer Empfindlichkeit der Sensorfläche geeignet sein, nur die hellsten Körperpunkte zu erfassen. Auch können optische Filter zwischen Messobjekt und der Bildaufnahmeeinrichtung angeordnet sein. So können vorzugsweise Farb- oder Polarisationsfilter, Tageslichtsperrfilter oder Graufilter eine Datenmenge auf der Bildaufnahmeeinrichtung bildinhaltlich reduzieren. Farbliche Unterschiede, Helligkeitsunterschiede und/oder Reflexionseigenschaften sind entweder auf der Oberfläche vorhanden oder werden durch Projektion bewirkt und durch diese Filter getrennt.

Eine Differenzbildungseinrichtung oder eine Differentiationseinrichtung in der Bildaufnahmeeinrichtung oder in der Datenverarbeitungsvorrichtung kann vorgesehen sein, um gleichbleibende Bildinhalte sequenzieller Bildverarbeitungszeitpunkte wegzufiltern, und nur die inhaltlichen Änderungen weiterer Verarbeitung zuzuführen, wobei aufgrund der Trägheit der Sensorelemente der Sensorfläche und deren Bewegung gegenüber dem Messobjekt auch eine Mehrfachbelichtung erfolgen kann. Durch Ableitung der Bildinhalte können flächig gleichbleibende Inhalte auf deren Konturen reduziert werden.

Neben der durch einen Benutzer aufgrund manueller Führung verursachten Änderung einer Lage der Sensorfläche gegenüber einem Messobjekt und zugleich vorhandener Beleuchtungskörper kann eine zusätzliche Beleuchtungseinrichtung vorgesehen sein. Diese kann gegenüber dem Messobjekt und der Sensorfläche in eine andere Position gebracht werden, was den Bildinformationsgehalt aufgrund anderer Reflexionswinkel und Schattenbildungen verändert. Die Differenzbildungseinrichtung zeigt dann nur diese Änderungen. Auch kann eine Intensität des zusätzlichen Beleuchtungskörpers geändert werden. Zum Beispiel entstehen bei einem einmal eingeschalteten und einmal ausgeschalteten Betrieb zwei Bilder. Eine Differenz dieser Bilder zeigt die Änderungen. Neben Intensität bzw. Helligkeit und Lage kann auch die Farbe veränderbar sein, um gezielte Oberflächenfarben zu betonen. Eine Strahlcharakteristik kann geeignet sein, nur bestimmte Teile der Oberfläche zu betonen.

Für eine Eingabe von Positions- und Orientierungsdaten der Sensorfläche gegenüber Messobjekten kann eine Schnittstelle vorgesehen sein.

Eine weitere Schnittstelle ist dazu vorgesehen, die durch den Algorithmus korrigierten Positions- und Orientierungsdaten oder die ermittelten Korrekturdaten auszugeben. Systematische Eingabefehler in den Positions- und Orientierungsdaten können dann bei nachfolgenden Messzeitpunkten vor Anwendung des Algorithmus korrigierend berücksichtigt werden. Dadurch wird die Zeit zur iterativen Annäherung an Sollwerte reduziert.

Es ist zweckmäßig, einen Inertialsensor in starrer Verbindung mit der Bildaufnahmevorrichtung vorzusehen. Dieser wird an die Eingabeschnittstelle angeschlossen. Seine Positions- und Orientierungsdaten dienen der groben Bestimmung der Position und Orientierung der Sensorfläche gegenüber dem Messobjekt.

Besonders bei Körpern mit ähnlichen Oberflächenmerkmalen ist es vorteilhaft, Referenzkörper mit bekannten Oberflächeneigenschaften zusammen mit unbekannten oder durch nicht eindeutig zuordenbare Oberflächengestaltung charakterisierte Messobjekte im Bildaufnahmebereich zu positionieren. Die gleichzeitige Erfassung von markierten und/oder auch markanten Kurvenstücken beider Objekte im Bildaufnahmebereich und eine Kombination der erfassten Oberflächenpunkte oder Kurven des Mess- und des Referenzkörpers erlaubt eine eindeutige Positions- und Orientierungsdatenerfassung bezogen auf ein Referenzkoordinatensystem.

Ein Beleuchtungskörper kann eine Strahlenquelle zur Markierung von Kurvenstücken oder punktuellen Teilen davon sein, insbesondere eine Laserlichtquelle.

Im Strahlengang der Strahlenquelle können optische Linsen oder in Schwingung versetzbare Spiegel angeordnet sein. Diese beleuchten gezielt Oberflächenkurven oder Punkte des Messobjektes.

Vorteilhaft kann der Einsatz eines Lichtschnittverfahrens sein, z. B. mit drei Laserstrahllinien.

Alternativ kann eine schattenbildende Schablone im Strahlenweg einer Strahlenquelle angeordnet sein und der Schablonenrand für die Markierung von Kurvenstücken auf der Körperoberfläche maßgeblich sein.

Zweckmäßig können durch Projektion erzeugte Kurven zumindest verzerrte Teile der Schnittlinie einer systembekannten Fläche mit einer bekannten Projektionsfläche enthalten. Die von einer unbekannten Oberfläche verursachten Verzerrungen können über die Abbilder auf der Sensorfläche ermittelt werden und ermöglichen die Berechnung eines Normalvektors.

Mindestens eine Einrichtung sollte zur Ausgabe des Messergebnisses vorgesehen sein. Diese kann eine Anzeigeleuchte, ein Bildschirm, ein Drucker oder eine Schnittstelle für Speicherkarte, Bildschirm, Drucker oder EDV-Anlagen sein.

Die Erfindung wird anhand der anliegenden Zeichnungen näher beschrieben. Es zeigen:
Fig. 1 ein Flussdiagramm;
Fig. 2 ein allgemeines Messobjekt mit drei erfassten Messkurven;
Fig. 3 ein Beispiel für ein Querschnittsprofil eines Streckkörpers;
Fig. 4 eine perspektivische Darstellung eines Streckkörpers mit einem Profil gemäß Fig. 3;
Fig. 5 ein Beispiel eines rotationssymmetrischen Körpers in seitlicher Ansicht;
Fig. 6 eine perspektivische Darstellung des Körpers aus Fig. 5;
Fig. 7 eine Vorrichtung bzw. ein Messinstrument im Einsatz;
Fig. 8a und 8b das Messinstrument gemäß Fig. 7 mit einzelnen Funktionsblöcken;
Fig. 9a bis 9e eine schrittweise Annäherung an das gesuchte Körperprofil;
Fig. 10a bis 10c drei unabhängige Lichtschnitte (gerade Lichtschnittebenen) in Blickrichtung parallel zur Strahlrichtung zu drei Zeitpunkten;
Fig. 11a bis 11c die zu Fig. 10a bis 10c zugehörigen Bilder auf einer Sensorfläche;
Fig. 12a bis 12c die gefilterten Lichtschnitte gemäß Fig. 11a bis 11c;
Fig. 13 eine räumlich reale Zuordnung der Schnitte auf ein Messobjekt in einem gemeinsamen Koordinatensystem;
Fig. 14 erfasste Daten als fein aufgelöste Punktreihen in einem gemeinsamen Koordinatensystem in zweidimensionaler Darstellung;
Fig. 15 die um einen Zentrumspunkt des Koordinatensystems gedrehte zweidimensionale Darstellung der dreidimensional vorliegenden Kurven, wobei Abstände der Kurven in der 2D-Ansicht minimiert sind, mit eingepasster Referenzkurve.

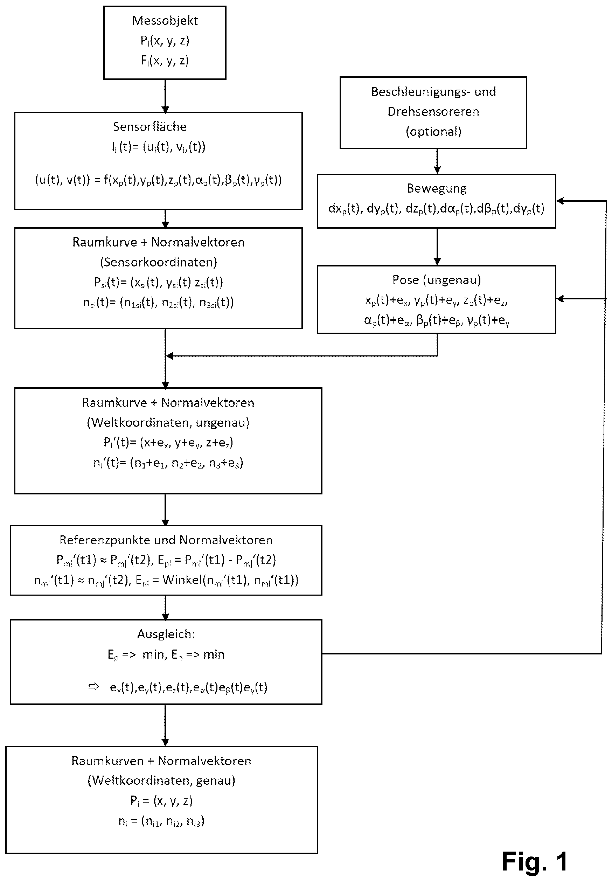

Ein erfindungsgemäßes Verfahren ist anhand des Flussdiagrammes in Fig. 1 grob dargelegt. Auf einer Sensorfläche 4 bilden sich Raumpunkte Pᵢ(x,y,z) oder Raumkurven Fᵢ(x,y,z) der markierten oder auch markanten Oberflächen eines Festkörpers zweidimensional als Bildpunkte (u(t), v(t)) ab. Die Abbildung ist eine Funktion einer Lage xₚ,yₚ,zₚ und einer Orientierung αₚ,βₚ,γₚ der Sensorfläche 4 im Raum, welche vom Benutzer bestimmt wird und zeitlich veränderlich ist.

Durch trigonometrische Beziehungen aufgrund einer Kenntnis von Beleuchtungs- und Erfassungswinkel können aus den Bildpunkten Raumpunkte (xₛᵢ(t),yₛᵢ(t),zₛᵢ(t)) bezogen auf die Sensorkoordinaten ermittelt werden. Dabei stellt w(t) eine auf die Sensorebene u,v normale rechnerisch ermittelte Ausdehnung in Sensorkoordinaten dar. Für alle oder einige Raumpunkte Pₛᵢ = (xₛᵢ,yₛᵢ,zₛᵢ) werden Normalvektoren nₛᵢ = (n₁ₛᵢ,n₂ₛᵢ,n₃ₛᵢ) ermittelt.

Werden die Werte der Position und Orientierung der Sensorfläche 4 oder zumindest deren Änderungen dx(t), dy(t), dz(t), dα(t), dβ(t), dγ(t) grob ermittelt, können die Sensorkoordinaten für jeden Zeitpunkt in Weltkoordinaten umgerechnet werden. Es entsteht ein Puzzle von Raumpunktwolken Pᵢ', die in grober Platzierung und Orientierung in Weltkoordinaten angeordnet sind. Da die Position und Orientierung eines vermessenen Körpers als konstant angenommen wird, sind die Weltkoordinaten identisch zu Festkörperpunkten.

Wegen einer nur ungenau bekannten Position und/oder Orientierung sind für jede Sicht der Sensorkoordinaten aber nur geringfügig um die Fehler eₓ,e_{y},e_{z} e_{α},e_{β},e_{γ} verschobene oder verdrehte Weltkoordinaten vorhanden. Daher ist noch keine exakte abgeschlossene 3D-Darstellung des vermessenen Festkörpers möglich. Kleine Lageverschiebungen und Verdrehungen durch ungenaue Ermittlung von Orientierung und Position der Sensorfläche 4 müssen daher mithilfe von Referenzpunkten Pₘ' und Referenzpunkt-Normalvektoren nₘ' eliminiert werden. Dazu werden bestimmte identifizierbare Punkte ausgewählt, für welche neben den Punktkoordinaten auch die Normalvektoren bestimmt werden. Diese identischen Daten aus nicht identischen Erfassungsabbildern dienen dazu, Positionskorrekturen eₓ',e_{y}',e_{z}'e_{α}',e_{β}',e_{γ}' zu berechnen, mit denen die Fehler Eₚᵢ und Eₙᵢ minimiert werden.

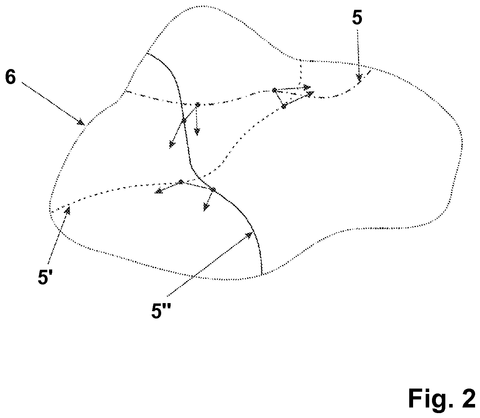

Fig. 2 zeigt einen unregelmäßigen Formkörper; drei Linien sind als Oberflächenraumkurven bzw. Kurvenstücke 5, 5', 5" eines Messobjektes 6 gezeigt. Eine grobe Raumposition ist durch die grob bekannte Position des Sensors bekannt. Die nächstliegenden Punkte dieser Raumkurven werden als Referenzpunkte identifiziert und Normalvektoren zu diesen Referenzpunkten bestimmt. Die Raumlage dieser Raumkurven muss im nachfolgenden Schritt korrigiert werden, sodass die Abstände dieser Referenzpunkte zueinander und die Winkeldifferenzen ihrer Normalvektoren minimiert werden.

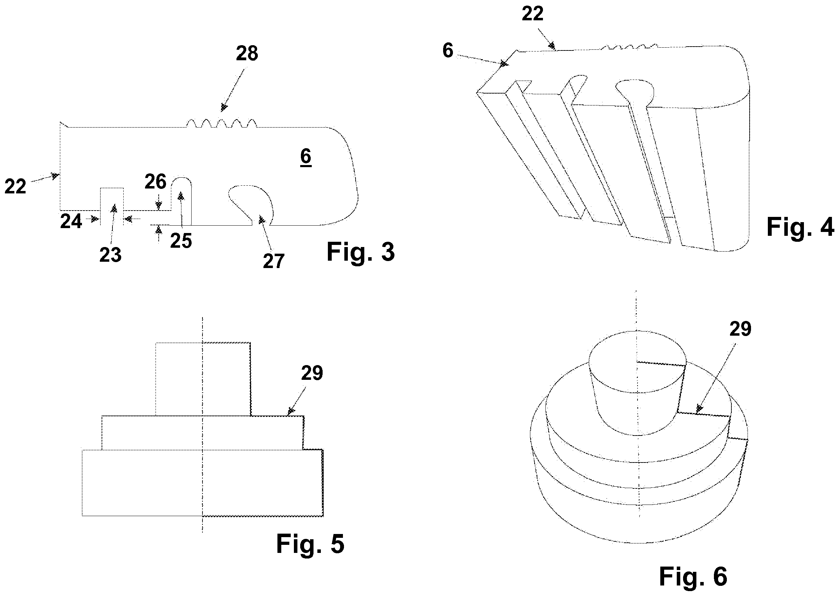

Das erfindungsgemäße Verfahren erlaubt das Ermitteln ganz bestimmter wesentlicher geometrischer Formdaten. In Fig. 3 bis 6 sind zwei unterschiedliche Beispiele für Objekte gezeigt. Das erfindungsgemäße Verfahren erlaubt eine rasche und hinreichend genaue Bestimmung einer erzeugenden Kontur 22 eines Streckkörpers oder einer erzeugenden Kontur 29 eines Rotationskörpers. Dabei muss die Ausdehnung oder Drehung nur so weit gegeben sein, dass im Messbereich eines Messgerätes ausreichende Redundanz der Formeigenschaft besteht. Eine Form kann zumindest in einem bestimmten Längenabschnitt oder in einem bestimmten Winkelabschnitt einen gleichbleibenden Konturabschnitt besitzen. Die gezeigten Profile dienen nur der Anschaulichkeit.

Ein Messobjekt 6 gemäß Fig. 3 weist verschiedene Ausnehmungen 23, 25, 27 und einen oberflächenstrukturierten Abschnitt 28 auf. Mit einem erfindungsgemäßen Verfahren bzw. einer später beschriebenen erfindungsgemäßen Vorrichtung 1 soll eine Spaltbreite 24 oder ein Versatz 26 bestimmt werden können. Weiters sollen Abweichungen des Profils bzw. der Kontur 22 gegenüber einem Sollprofil messbar sein. Eine Möglichkeit der Messung einer Profiltreue über die gesamte Ausdehnung ist ebenfalls durch das Messgerät feststellbar.

In Fig. 4 ist das Messobjekt 6 mit dem Profil der Kontur 22 aus gemäß Fig. 3 in räumlicher Darstellung gezeigt. Dieses Bild kann von einer optischen Sensorfläche 4 erfasst werden. Da eine Kontur der Schnittfläche sichtbar ist, bräuchte diese nicht extra hervorgehoben werden. Mithilfe von Bildverarbeitungsprogrammen kann die Kontur 22 aus dem Bildinhalt gefiltert werden. Diese weist jedoch eine aufgrund der Position und Orientierung des Messobjektes 6 gegenüber der Sensorfläche 4 eine perspektivische Verzerrung auf. Es fehlt die Tiefeninformation. Sind jedoch Formeigenschaften bekannt, wie beispielsweise rechte Winkel, ist es möglich, die perspektivische Verzerrung durch die Zentralprojektion wieder zurückzurechnen und eine Normaldarstellung zu errechnen. Die Genauigkeit ist von der Auflösung der Sensorfläche 4, also der Zahl der Sensorelemente, aber auch von einer Güte einer Optik abhängig. Je mehr Bildpunkte die optische Sensorfläche 4 aufweist, desto genauer kann die Kontur 22 ermittelt werden. Optische Verzerrungen können durch Kalibrierungen behoben werden, wobei bekannte Objekte oder Musterflächen im Erfassungsraum einer Korrektur dienen können.

Vektorisierungsprogramme können die Pixelgraphiken umrechnen und aus den so erhaltenen Darstellungen können dann gewisse Forminformationen herausgelesen werden. Schwieriger ist es, wenn die Schnittfläche eines Streckkörpers nicht sichtbar oder nur teilweise sichtbar ist oder wenn die Stirnfläche keinen Normalschnitt darstellt. Wenn ein interessierendes Profil in einem Zwischenabschnitt eines Körpers vorliegt, kann eine reine Bildverarbeitung nicht mehr erfolgreich sein.

In Fig. 5 ist ein stufiger Drehzylinder mit drei unterschiedlichen Radien entlang dreier unterschiedlicher Längenabschnitte gezeigt. Die zu messende Kontur 29 ist stärker hervorgehoben. In Fig. 6 sieht man den Rotationskörper in perspektivischer Ansicht ebenfalls mit der Betonung der zu messenden Kontur 29. Für eine optische Sensorfläche 4, wie beispielsweise jene einer Digitalkamera, muss hier jedenfalls diese Linie markiert werden, sei es am Objekt durch Farbe oder durch einen exakten Lichtschnitt. Wieder kann mit bildverarbeitenden Methoden diese Kontur in die Bildebene umgerechnet werden, wenn die Formeigenschaften hinreichend bekannt sind.

Ein genauer Lichtschnitt benötigt exakte Ausrichtung der Strahlenebene auf dem Messobjekt 6, die Orientierung und Position von Kamerabildebene und Messobjekt 6 muss eindeutig definiert sein, um genaue Ergebnisse zu liefern. Wird die gesuchte Profilkontur am Objekt farblich hervorgehoben, ist der Aufwand allein dafür sehr hoch.

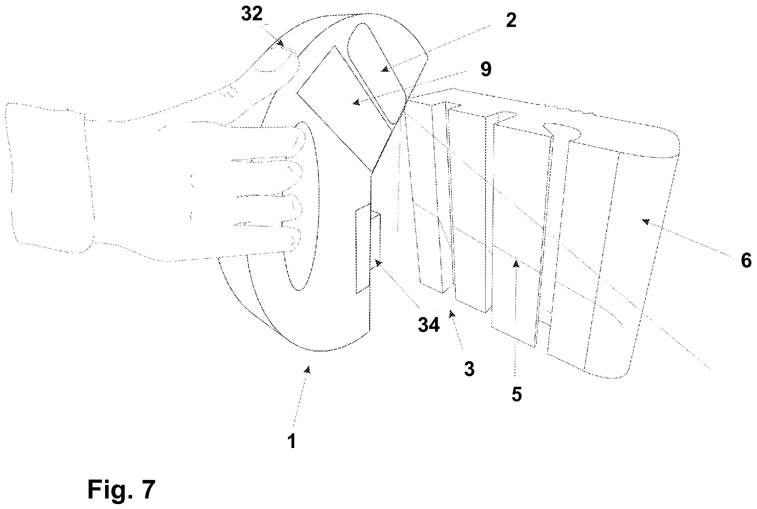

Eine erfindungsgemäße Vorrichtung 1 erleichtert nun die Arbeit, insbesondere im Vergleich zur mechanischen Vermessung durch Lehren. Diese Vorrichtung 1 ist in Fig. 7 als handgeführtes Gerät skizziert. Im oberen Abschnitt eines Gehäuses ist eines Markierungseinrichtung 2 eingebaut. Diese ist hier ein Halbleiterlaser mit einer Optik zur flächigen Aufweitung der kohärenten Strahlen entlang eines Horizontalwinkelabschnittes in Strahlrichtung, wodurch hier eine oder mehrere Geraden, vorzugsweise drei Geraden, auf eine die Strahlebene schneidende ebene Fläche projiziert werden.

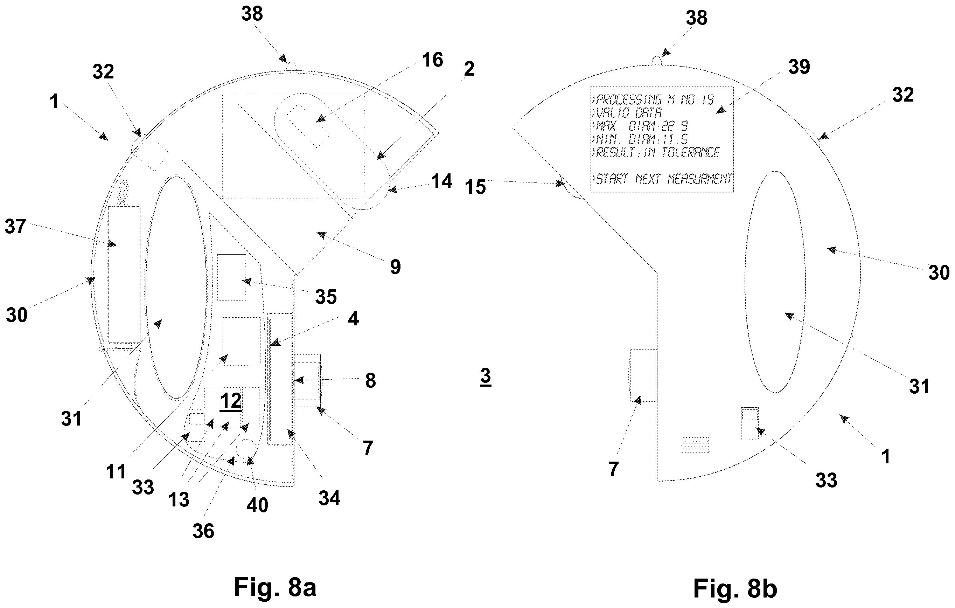

Eine Lichtprojektion erfolgt hier im Winkel von 45° gegenüber der Zielrichtung des Gerätes. Die Zielrichtung ist durch die Flächennormale auf die Sensorfläche 4 gegeben, welche sich im unteren Abschnitt der Vorrichtung 1 befindet (siehe Fig. 8a). Die durch die Markierungseinrichtung 2 aufgespannte Ebene zieht sich durch einen von der Sensorfläche 4 erfassten Bereich 3.

Die Sensorfläche 4 kann Teil eines digitalen Kameramoduls 34 sein. Auf ihr bildet sich durch die Öffnung der Kamera zweidimensional der erfasste Bereich 3 ab. Durch die Markierungseinrichtung 2 wird die eine Körperkontur bzw. Kurvenstücke 5, 5', 5" besonders hervorgehoben. Wird zum Beispiel ein Bild bei eingeschaltetem Laser und eines bei ausgeschaltetem Laser gemacht, kann eine Differenz der Bildinhalte gebildet werden. Der Abstand der Aufnahmen muss möglichst kurz gegenüber einer möglichen Bewegung sein, um gleiche Bildinformation zu haben.

Eine sehr kurze Belichtungszeit oder ein energiereicher Laserlichtblitz, wenig Umgebungslicht oder spezielle optische Filter ermöglichen es, dass nur diffuses Reflexionslicht des Laserlichtes durch den bzw. die optischen Sensoren erfasst wird.

Aufgrund eines Triangulationswinkels kann in diesem Lichtschnittverfahren jedem Bildpunkt ein Raumpunkt im Sensorkoordinatensystem zugeordnet werden. Die dafür benötigten Systemparameter werden durch Kalibrierung gewonnen. Dadurch kann aus der Bildinformation und den Kalibrierdaten über die Abbildungsgenauigkeit und die Genauigkeit des Triangulationswinkels ein eindeutiges Modell der erfassten Kurve bezogen auf die Sensorkoordinaten gebildet werden.

Mithilfe eines Inertialsensors 9 in der Vorrichtung 1 kann die Bewegung derselben um das Messobjekt 6 erfasst werden. Dabei dienen drei zueinander orthogonale Beschleunigungssensoren der Erfassung der Translation durch zweifache Integration der erfassten Beschleunigung und drei orthogonale Winkelgeschwindigkeitssensoren zur Erfassung der Rotation. Über Koordinatentransformation kann mithilfe der erfassten Bewegungsdaten jede markierte und erfasste Kurve auf dem Messobjekt 6 eindeutig einer Raumbeschreibung zugeordnet werden. Allerdings ist diese Zuordnung von der Messgenauigkeit des Inertialsensors 9 abhängig, wodurch die Zielgenauigkeit der so erfassten Daten für bestimmte Anwendungen nicht ausreichen kann.

Für eine reine rekonstruktive dreidimensionale Abbilderfassung reichen die Auflösung der Sensorfläche 4 und die Genauigkeit kostengünstiger Inertialsensoren 9 jedoch aus. Um die Bilddaten der Sensorfläche 4 und die Daten des Inertialsensors 9 zu verarbeiten, ist ein integrierter Mikroprozessor in einer Datenverarbeitungseinrichtung 11 vorgesehen und geeignete Software weist der Bildinformation eindeutige Raumpunktkoordinaten zu, welche mit den Daten eines genauen Inertialsensors 9 in ein gemeinsames Koordinatensystem umgerechnet werden. Als Arbeitsspeicher 13 dienen interne RAM-Speicherchips. Durch eine Erfassung möglichst vieler Kurvenstücke 5, 5', 5" auf der Oberfläche eines Objektes kann dasselbe als 3D-Objekt in der EDV für Modellierung oder zur Ansteuerung von Rekonstruktionsgeräten dienen.

Die dargestellte Vorrichtung 1 weist gegenüber dem Stand der Technik eine Möglichkeit zur permanenten Selbstjustage der Positions- und Lagedaten aus den Messdaten auf, wodurch kostengünstige Inertialsensoren 9 eingesetzt werden können oder häufige Kalibrierung des Sensors wegfallen kann. Der im Programmcode 12 implementierte Algorithmus erfasst formredundante Daten für benachbarte Erfassungsorts- und Zeitpunkte und ermittelt durch Redundanzreduktion den Grundformverlauf des erfassten Abschnittes. Eine Redundanz ist beispielsweise durch abschnittsweise konstanten Querschnitt in linearer oder rotatorischer Ausdehnung gegeben. Da der Benutzer das Messgerät während des Messvorganges nicht ruhig und konstant an einem Ort halten kann, kann das Gerät mehrere leicht zueinander versetzte Kurvenzüge erfassen. Diese weisen aufgrund der Redundanz kongruente und ähnliche Abschnitte auf.

Ein mögliches Verfahren zur Ermittlung einer Vorzugsschnittfläche ist in AT 501 507 bereits vorgestellt. Dort sind jedoch bekannte geometrische Gesetzmäßigkeiten in einer Raumrichtung Voraussetzung. Eine Erfassung ganzer Umlaufkonturen ist aufgrund eines fehlenden Inertialsensors nur erschwert mithilfe von Überlappungen möglich. Ähnlichkeiten im Umfangsverlauf können Zuordnungsmehrdeutigkeiten erzeugen.

Eine zweckdienliche Verbesserung stellt ein Nutzen von Lichtflächenspotbegrenzungsflächen oder Schattenbegrenzungsflächen dar, insbesondere wenn die Form eines Lichtflächenspots oder einer Schattenfläche systembekannt ist.

Fig. 8a und 8b zeigen die Vorrichtung 1 aus Fig. 7 in Seitenansichten. Die Vorrichtung 1 umfasst die beschriebenen Komponenten: Markierungseinrichtung 2 mit einer Strahlquelle 16, lichtempfindliche Sensorfläche 4 im Kameramodul 34, Inertialsensor 9, einen Mikroprozessor in der Datenverarbeitungseinrichtung 11 und Arbeitsspeicher 13, wobei die Datenverarbeitungseinrichtung 11 und Arbeitsspeicher 13 gemeinsam auf einer Platine 36 angeordnet sind. Ein Haltegriff 30 mit einer Greiföffnung 31 erlaubt die einfache Handhabung. Am oberen Ende des Griffes können ein oder zwei Auslöseschalter oder Taster 32 vorgesehen sein, welche einen Messvorgang auslösen oder eine Messvorgangsreihe starten und stoppen können. Zur Aufnahme von Daten bzw. Bildern weist die Vorrichtung 1 ein Objektiv 7 mit einer Öffnung 8 auf.

Beim Einschalten einer Stromversorgung 37 über einen Schalter 33 wird die Markierungseinrichtung 2, die zumindest ein eine Markierung definierendes Element 14, 15 umfasst, aktiviert und die Software gestartet, eine Initialisierung und eventuelle Selbsttests werden durchgeführt. Dies erlaubt dem Benutzer eine optische Überprüfung, dass das Messgerät bzw. Vorrichtung 1 aktiv ist und fehlerfrei arbeitet. Zusätzlich kann eine Anzeige des Betriebszustandes über eine Leuchtdiode 38 oder ein LCD 39 erfolgen. Der Benutzer hält also das Messgerät in Richtung Objekt im für ihn interessanten Oberflächenbereich. Dann betätigt ein Benutzer den Startauslöser bzw. Taster 32 mit dem Daumen. Eine Messung beginnt.

Verschiedene Modi können vorgesehen sein. Ein Einzelaufnahmemodus ermöglicht sparsame Verwendung des Speicherbedarfs. Dabei nimmt der Benutzer in ausreichend engen räumlichen Abständen rund um ein Messobjekt 6 Konturlinien auf, welche beliebige Lage zueinander haben dürfen, jedoch möglichst eine genannte Redundanzeigenschaft des Messobjektes 6 nicht verlassen sollen. Es können dabei beispielsweise 15 Aufnahmen definiert sein. Nach der 15. Aufnahme analysiert ein zuvor gespeichertes Berechnungsprogramm in einem ROM die Bilder und bildet die gesuchten Messwerte. Anstelle der Einzelaufhahmen können auch Serienaufhahmen stattfinden. Dann wird automatisch in vorbestimmten Zeitabständen ein Auslösen durchgeführt. Der Benutzer fährt dann zügig das Messobjekt um einen Erfassungsraum bzw. erfassten Bereich 3 ab. Akustische Signale können den Start, die Zeitpunkte einer Aufnahme und das Ende einer Serie anzeigen. Dazu kann eine Einrichtung 40 dienen.

Im einfachsten Fall kann nach der erfolgten Messung die Leuchtdiode 38 anzeigen, dass das erlaubte Toleranzmaß für den Querschnitt, für eine Spaltbreite oder für einen Versatz eingehalten ist oder nicht, z. B. durch Wechseln der Farbe.

Die gesamten ermittelten Daten des sehr wahrscheinlichen Profils können auf einem Speicher abgelegt und über eine Schnittstelle an weitere EDV-Geräte übermittelt werden. Durch Vektorisierung kann die Datenmenge klein gehalten werden. Die Daten der einzelnen erfassten Linien nehmen ein Vielfaches dieser Datenmenge ein und werden vorzugsweise nur temporär abgelegt.

Mögliche Schnittstellen für Datentransport oder Programmaktualisierung sind unter anderen USB (Universal Serial Bus, serielle Datenschnittstelle), Bluetooth und WLAN (Funkschnittstellen) über eine Schnittstellenschaltung 35. Beispielsweise können die Daten auf einen USB-Stick übertragen werden, um von einem stationären Rechner eingelesen zu werden. Auch ein Speicherkarten-Slot kann vorgesehen sein. Die Schnittstellenschaltung 35 ist zweckmäßigerweise zusammen mit anderen elektronischen Komponenten auf der Platine 36 angeordnet. Für eine Stromversorgung 37 können eine oder mehrere Batterien bzw. Akkumulatoren vorgesehen sein.

Für zusätzlichen Komfort kann auch ein Bildschirm auf der Vorrichtung 1 vorgesehen sein und/oder über eine Schnittstelle zusätzlich angeschlossen werden. Auf diesem kann das ermittelte Profil und/oder die daraus ausgewerteten Messungen gezeigt werden. Ist ein berührungsempfindliches Display vorhanden, können benutzerseitig viele Parameter menügeführt verändert werden.

Da das Messgerät sehr spezifisch programmiert werden kann, ergeben sich viele unterschiedliche Applikationen. Die Vorrichtung 1 kann als Messgerät für Eisenbahnräder oder als ein Messgerät für Schienenprofile, als Messgerät für Baumstämme oder vieles andere mehr programmiert sein. Je nach Anwendungsfall gibt es unterschiedliche Ausgabewerte. Insbesondere können Profile mit für das Auge nur schwer erkennbaren Unterschieden rasch voneinander unterschieden und geordnet werden, z. B. jene von Schlüsseln.

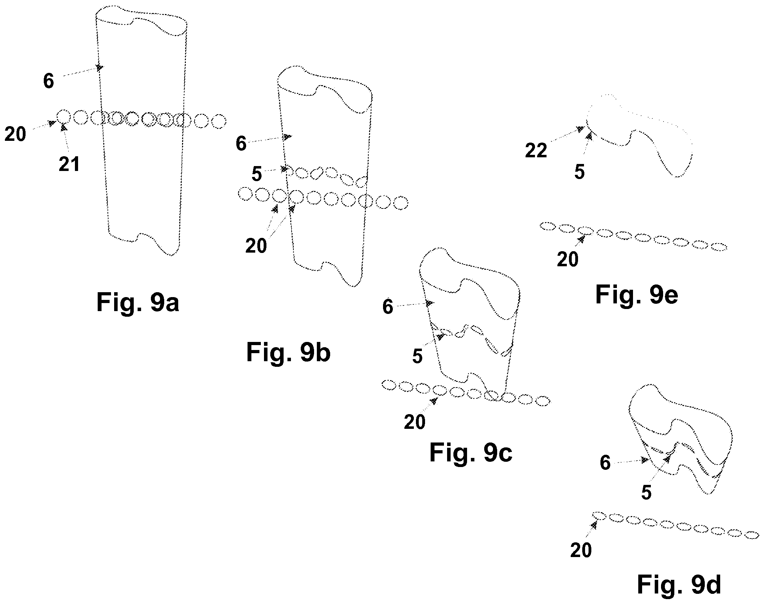

Fig. 9a bis 9e verdeutlichen das Wesen der ersten Variante des vorgeschlagenen Messprinzips anhand von Kreisen. Diese stellen Schnittlinien von systembekannten Flächen (hier: Kegelflächen) mit einer bekannten Projektionsfläche (hier: Ebene) dar. In Fig. 9a ist die Betrachtung in Projektionsrichtung aus der Markierungseinrichtung 2 gezeigt. Diese Kreiskurven, welche entweder gleichzeitig oder hintereinander auf verschiedene Oberflächenteile des Messobjektes projiziert werden könnten, werden durch die Oberfläche verformt (hier: Ellipsen oder verkrümmten Ellipsen). Aus Größe und Lage der Ellipsenhauptachsen kann auf die Richtung der Oberflächennormale im Sensorkoordinatensystem geschlossen werden.

In Fig. 9b bis 9e ist diese Veränderung verdeutlicht. Der Flächeninhalt der Kreise wird für einen bestimmten Betrachtungswinkel von einem Blickpunkt außerhalb des Erfassungsbereiches immer kleiner, bis dieser aufgrund der redundanten Profilform gegen null geht. Sind nun rund um die gesuchte Querschnittfläche alle Kreisprojektionen flächenparallel zur Betrachtungsrichtung, dann verschwinden bei ausreichender Streckenkongruenz die Flächeninhalte der durch die Oberfläche verzerrten Kreisprojektionen.

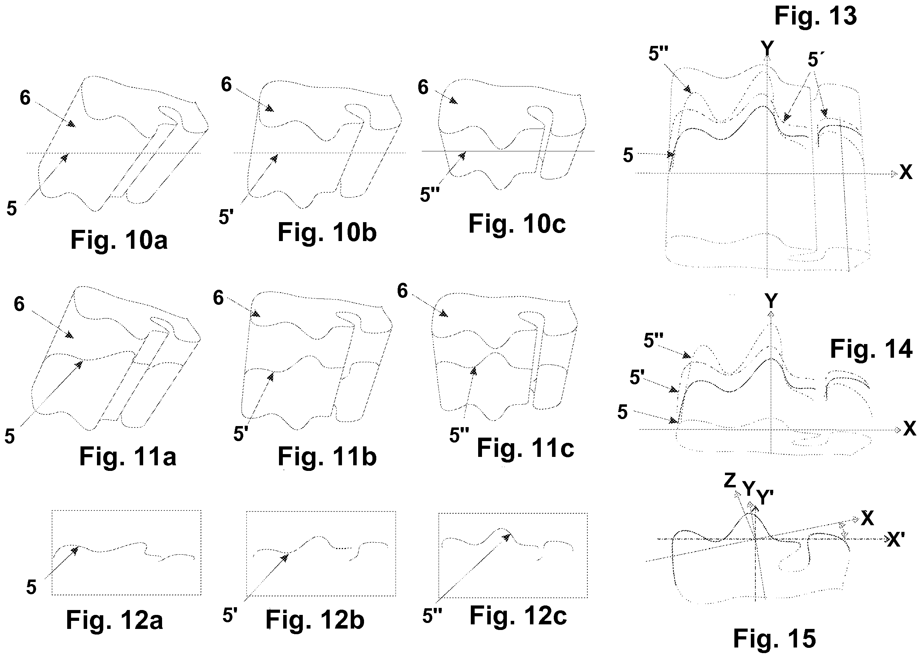

Anstelle von Kreisen können beliebige systembekannte Kurven projiziert werden. Der einfachste Fall sind Geradenstücke, insbesondere mehrere parallele Geradenstücke. Nach Projektion dieser Stücke rund auf die Oberfläche rund um das Profil liegt im Speicher eine Vielzahl von verformten Raumkurvenstücken vor, welche durch den Inertialsensor 9 und die Triangulation eine eindeutige Raumzuordnung aufweisen. Der Algorithmus ist in diesem Fall ähnlich.
Die Schritte der Erfassung sind in Fig. 10 bis 15 dargestellt. In Fig. 10a bis 10c ist ein Messobjekt gezeigt, welches in Richtung der Bestrahlung durch eine Markierungseinrichtung Geraden zeigt, welche jedoch in einer Ebene normal zur Bildebene bestimmte Wölbungen des Messobjektes aufweisen. Die Linien sind an drei verschiedenen Positionen zu drei verschiedenen Zeitpunkten aufgebracht. Da die lichtempfindliche Sensorfläche 4 gegenüber der Strahlachse einen Triangulationswinkel aufweist, wird auf dieser jeweils ein Bild abgebildet, welches den Darstellungen Fig. 11a bis 11c entspricht. Das Messobjekt 6 ist insgesamt zu sehen und trägt jeweils ein betontes Kurvenstück 5, 5', 5". Durch Filterung wird nur die Information der Kurvenstücke 5, 5', 5" aus den drei Zeitaufnahmen gemäß Fig. 12a bis 12c als digitales Abbild (Punktvektoren) gespeichert. Jede Kurve hat ihr Koordinatensystem. In einem ersten Schritt wird die Position und Orientierung der Kurve auf ein gemeinsames Bezugskoordinatensystem transformiert. Dieses System kann wie in Fig. 13 gezeigt einem virtuellen Raumkörper als zweidimensionales Abbild zugeordnet sein. Hier ist die reale Lage des Raumkörpers strichliert in die Darstellung eingezeichnet, um die Situation der drei erfassten Kurvenstücke 5, 5', 5" auf dem Körper zu verdeutlichen. Dieser Körper liegt jedoch nicht in Form von Daten dem System vor. Die Daten der Kurven sind im gemeinsamen Bezugssystem in Fig. 14 gezeigt. Zusätzlich ist die gesuchte Kontur strichliert eingefügt. Wird die Darstellung um zwei Achsen durch das Zentrum der Erfassungsebene im gemeinsamen Bezugskoordinatensystem gedreht, können die erfassten Teilstücke in ihren Überlappungsbereichen in die gleiche Fluchtrichtung normal auf die Bildebene auf bestmögliche Überdeckung gebracht werden, die so erhaltene zweidimensionale Darstellung ergibt die gesuchte Kurvenform oder Fragmente davon. Fig. 15 zeigt das Ergebnis mit einer zuvor gespeicherten Basisform in Deckung gebracht. Fig. 13 und Fig. 14 sind hier nicht geometrisch exakt, zumal die Zentralprojektionsdarstellung keine eindeutige Skalierung der x- und y-Achsen für alle z-Werte zulässt.

In Fig. 15 ist die Zentralprojektionsverzerrung dagegen unberücksichtigt und die Achsen x', y' sind eindeutig bestimmbar und somit auch bestimmte Formabmessungen. Neben den eindeutigen Lagepositionen der Kurvenstücke 5, 5', 5" mithilfe des Inertialsensors 9 kann auch die Kongruenz oder treffender die Ähnlichkeit der Kurven zur Orientierungsbestimmung zweier Kurven zueinander dienen. Dadurch kann in der Folge die Lage der Kurven bezogen auf die Normalschnittlage ermittelt werden. Die Ähnlichkeit der Kurven ermöglicht somit eine Kontrolle und Erhöhung der Messgenauigkeit des Gesamtmessvorganges und rückwirkend auch eine Kalibrier- oder Korrekturmöglichkeit für den Inertialsensor 9, insbesondere für sein Driftverhalten.

Diese erste Variante des Messprinzips stellt folglich eine Stauchung und Parallelverschiebung in eine gemeinsame Ebene normal zur Ausdehnungsrichtung des Profils dar.

Die zweite Variante des Messprinzips kann dann erfolgen, wenn trotz gemeinsamer mathematischer Rotation der betonten Kurvenstücke um zwei zueinander orthogonale Raumrichtungen keine Lösung erfolgen kann, wodurch eine Redundanz aufgrund von in gemeinsamer Flucht liegenden überlagerten Kurvenstücke 5, 5', 5" eliminiert werden würde.

Dann handelt es sich möglicherweise um einen erfassten Messobjektabschnitt mit drehsymmetrischen Eigenschaften. Für große Radien des Rotationskörpers und dazu in kleinen Winkelabschnitten erfassten Kurven kann näherungsweise sin α = α gesetzt werden, dann ergibt sich auch aus der ersten Variante ein verwendbares Resultat. Anderenfalls wird zweckmäßiger als gemeinsames Koordinatensystem ein Zylinderkoordinatensytem (r, ϕ, z) gewählt.

Zur Ermittlung der Position und Orientierung der Rotations- oder Drehachse dienen wieder die Ähnlichkeiten der erfassten Kurvenstücke 5, 5', 5". So kann das Koordinatensystem durch Drehen und Verschieben in eine Position und Lage gebracht werden, in welcher mindestens drei bestimmte zuordenbare Formpunkte wie Knicke, Sprünge oder dergleichen den gleichen Abstand R zum gesuchten Zylinder koordinaten mittel punkt aufweisen. Die resultierende Lage entspricht der Polarkoordinatenansicht. Dann werden alle Punkte aller erfassten Kurven in die gleiche Polarkoordinatenwinkellage gedreht, z. B. in die z-Ebene mit Winkel ϕ = 0°. Diese Operation entspricht einer Drehstauchung der erfassten betonten Kurvenstücke. Die gewählte z-Ebene bildet zufolge alle erfassten Kurvenstücke 5, 5', 5" in Profilebene ab, wobei das resultierende Profil dem gesuchten Profil äußerst ähnlich ist, wenn man von geringen lokalen nicht erfassten Oberflächenveränderungen absieht. Das Ergebnis zeigt ein interpoliertes über die erfassten Kurven gemitteltes Resultat mit den Hauptformeigenschaften. Gleichmäßiger Abrieb, Verschleiß, Abnützung, Formveränderung durch Temperatur oder Witterungseinflüsse können aber prinzipiell sehr gut und genau erfasst werden.

Neben der Verwendung der Vorrichtung 1 als Messgerät kann es auch als Navigationshilfe eingesetzt werden. Dafür kann die Genauigkeit einer Auflösung des eingebauten Inertialsensors 9 noch erhöht werden. Sehr genau gestaltete Messobjekte 6 mit gut vermessenen Formeigenschaften dienen als Positions- und Orientierungsreferenz.

## Patentansprüche

1. Verfahren zur mobilen optischen Erfassung von ausgewählten Oberflächendaten mindestens eines Festkörpers bzw. Messobjektes (6) anhand von Oberflächenkurven oder punktuellen Teilen davon und geometrisch-mathematische Kombination der Daten zur Ermittlung wesentlicher, den Körper charakterisierenden geometrischer Größen und/oder deren Analyse im Vergleich zu Solldaten durch sequenzielle Aufnahme und Verarbeitung zweidimensionaler Abbilder der ausgewählten Oberflächendaten auf einer lichtempfindlichen Sensorfläche (4), **dadurch gekennzeichnet, dass**
i) für jeden Punkt oder einige Punkte von Oberflächenraumkurven ein Vektor bestimmt wird, dessen Orientierung orthogonal auf ein um den Punkt liegendes Flächeninkrement ist, und
ii) eine Position und eine Orientierung der Sensorfläche (4) gegenüber dem Festkörper bzw. Messobjekt (6) zum Zeitpunkt der Erfassung jedes zweidimensionalen Abbildes in grober Genauigkeit ermittelt werden und der Berechnung von groben dreidimensionalen Daten der erfassten Punkte oder Kurven dienen und
iii) identische Kurvenpunkte aus unterschiedlichen Erfassungspositionen und/oder -orientierungen anhand dieser in grober Genauigkeit ermittelten Position und Orientierung aus den nächstliegenden Punkten der grob positionierten bzw. zusammengefügten Daten ermittelt oder mithilfe von eindeutigen Kurvenmerkmalen der Oberflächendaten identifiziert und iterativ aus den dazu grob erfassten Positions- und Orientierungsdaten einander angenähert werden, wobei Abstände zwischen Punktdaten eines identischen Punktes die Lage korrigierend minimiert werden und durch Verdrehungen der diesen Punktdaten zugehörigen Normalvektoren durch eine Orientierungskorrektur des zugehörigen Punktdatensatzes oder der zugehörigen Kurve die Normalvektoren parallelisiert werden.

2. Verfahren nach Anspruch 1, **dadurch gekennzeichnet, dass** anhand der gemäß Schritt iii) ermittelten Korrekturdaten eine Genauigkeit der relativen Positions- und Orientierungsdaten der Sensorfläche (4) für nachfolgende Erfassungen erhöht wird.

3. Verfahren nach Anspruch 1 oder 2, **dadurch gekennzeichnet, dass** zur Bestimmung der relativen Änderung der Position und Orientierung der Sensorfläche (4) eine Messung örtlicher Beschleunigungen und Drehraten derselben dient.

4. Verfahren nach einem der Ansprüche 1 bis 3, **dadurch gekennzeichnet, dass** bekannte Regelmäßigkeiten des Festkörpers benutzt werden, um Freiheitsgrade von Position oder Orientierung der Sensorfläche (4) einzuschränken und in einem weiteren Schritt redundante Daten zu eliminieren oder durch ihre Mittelung Fehler zu minimieren.

5. Verfahren nach einem der Ansprüche 1 bis 4, **dadurch gekennzeichnet, dass** Verzerrungen der zweidimensionalen Abbilder aufgrund der Abbildungsmethode durch Kalibrierung erfasst und berücksichtigt werden.

6. Verfahren nach einem der Ansprüche 1 bis 5, **dadurch gekennzeichnet, dass** charakteristische identifizierbare Merkmale aus den erfassten Daten gefiltert werden und zur Bestimmung der Normalvektoren perspektivische Verzerrungen oder Änderungen dieser Verzerrungen bei Anvisierung aus unterschiedlichen Orten und/oder Winkellagen mindestens einer auf der Körperoberfläche identifizierbaren Kurve oder von Punktabständen benachbarter Punkte verwendet werden.

7. Verfahren nach Anspruch 6, **dadurch gekennzeichnet, dass** als charakteristische Merkmale zumindest Teile von Körperaußenkonturen, farblich unterschiedliche Oberflächenpunkte oder -linien oder farblich unterschiedliche Flächenbereiche oder Flächenbereichsübergänge oder Kombinationen dieser Merkmale verwendet werden.

8. Verfahren nach zumindest der Anspruch 6 oder 7, **dadurch gekennzeichnet, dass** als charakteristische Merkmale Oberflächenkurven aus Reflexions-Lichtintensitäts-Übergängen sowie Eigenschatten ermittelt werden, wobei eine lokale Lichtintensität aus einer Form und Ausrichtung der Körperoberflächenbereiche oder aufgrund deren unterschiedlicher Oberflächenrauheit gegenüber einer Beleuchtungsquelle resultiert.

9. Verfahren nach einem der Ansprüche von 1 bis 8, **dadurch gekennzeichnet, dass** Punkte oder Kurvenformen auf die Körperoberfläche projiziert werden, wobei die Projektion durch Licht- oder Schattenwurf erfolgt, und die räumliche Lage mindestens dreier benachbarter Oberflächenpunkte durch Triangulation ermittelt wird, um eine Orientierung der Normalvektoren zu errechnen.

10. Vorrichtung (1) zur mobilen optischen Erfassung von ausgewählten Oberflächendaten mindestens eines Festkörpers bzw. Messobjektes (6) und zur Durchführung des Verfahrens nach einem der Ansprüche 1 bis 9, aufweisend eine Bildaufnahmeeinrichtung mit einer lichtempfindlichen Sensorfläche (4), zumindest eine Datenverarbeitungseinrichtung (11) und einen Datenspeicher (13), **dadurch gekennzeichnet, dass** mindestens eine Einrichtung dazu vorgesehen ist, zweidimensionale Abbilder mindestens eines markierten oder markanten Kurvenstückes (5, 5', 5") oder punktuellen Teilen des Festkörpers bzw. Messobjektes (6) zu filtern und ein Algorithmus im Programmcode (12) der zumindest einen Datenverarbeitungseinrichtung (11) vorgesehen ist, sodass die Datenverarbeitungseinrichtung (11) ausgerichtet ist,
i) zumindest in identifizierbaren identischen Kurvenpunkten mindestens zweier Kurven aus unterschiedlichen Messzeitpunkten und unterschiedlichen hinreichend groben Orientierungs- und Positionslagen anhand der jeweiligen Kurvenverzerrungen Vektoren zu bestimmen, deren Orientierung orthogonal auf die um die Punkte zugehörigen Flächeninkremente ist, und
ii) durch iterative Minimierung von Abständen und Vektorwinkellagefehlern identischer Kurvenpunkte unterschiedlicher erfasster Kurven Translations- und Rotationskorrekturen für die Positions- und Orientierungsdaten zu bilden.

11. Vorrichtung (1) nach Anspruch 10, **dadurch gekennzeichnet, dass** eine Schnittstelle vorgesehen ist, über welche die korrigierten Positions- und Orientierungsdaten oder die ermittelten Korrekturdaten ausgebbar sind, welche im Falle systematischer Eingabefehler der Positions- und Orientierungsdaten bei nachfolgenden Messzeitpunkten vor Anwendung des Algorithmus korrigierend Berücksichtigung finden.

12. Vorrichtung (1) nach Anspruch 10 oder 11, **dadurch gekennzeichnet, dass** eine Differenzbildungseinrichtung oder eine Differentiationseinrichtung in einer Bildaufnahmeeinrichtung oder in der Datenverarbeitungseinrichtung (11) vorgesehen ist, um gleichbleibende Bildinhalte sequenzieller Bildverarbeitungszeitpunkte oder flächenhafte Bildinhalte wegzufiltern, und nur die inhaltlichen Änderungen oder Flächenkonturen weiterer Verarbeitung zugeführt werden, wobei aufgrund der Trägheit der Sensorelemente der Sensorfläche und deren Bewegung gegenüber dem Messobjekt (6) eine Mehrfachbelichtung erfolgen kann.

13. Vorrichtung (1) nach einem der Ansprüche 10 bis 12, **dadurch gekennzeichnet, dass** eine Schnittstelle (42) für die Eingabe von Positions- und Orientierungsdaten der Sensorfläche (4) vorgesehen ist.

14. Vorrichtung (1) nach Anspruch 12 oder 13, **dadurch gekennzeichnet, dass** ein Inertialsensor (9) in starrer Verbindung mit der Bildaufnahmevorrichtung vorgesehen ist, der an eine Eingabeschnittstelle angeschlossen ist, und dessen Positions- und Orientierungsdaten der groben Bestimmung der Lage der Sensorfläche (4) gegenüber dem Messobjekt (6) dienen.

15. Vorrichtung (1) nach einem der Ansprüche 10 bis 14, **dadurch gekennzeichnet, dass** eine Strahlenquelle (16) zur Markierung von Kurvenstücken (5, 5', 5") oder punktuellen Teilen davon insbesondere mindestens eine Laserlichtquelle, vorgesehen ist.

## Claims

1. A method for the mobile optical recording of selected surface data of at least one solid body or measurement object (6) on the basis of surface curves or point-like regions thereof and geometrical-mathematical combination of the data to identify essential geometric parameters characteristic of the body and/or their analysis in comparison to reference data, by sequential acquisition and processing of two-dimensional images of the selected surface data on a light-sensitive sensor surface (4),
**characterized in that**
i) for each point or number of points of the curves a vector is defined, the orientation of which is orthogonal to a surface increment located around the point, and
ii) a position and an orientation of the sensor surface (4) with respect to the solid body or measurement object (6) at the time of recording of each two-dimensional image are determined with coarse accuracy and used to calculate coarse three-dimensional data for the recorded points or curves and
iii) identical curve points are determined from different recording positions and/or recording orientations on the basis of this position and orientation identified with coarse accuracy from the closest lying points of the coarsely positioned or assembled data, or are identified using unique curve features of the surface data and iteratively approximated to one another from the coarse position and orientation data recorded for the purpose, wherein distances between point data of an identical point that corrects the position are minimized, and the normal vectors are parallelized by means of rotations of the normal vectors associated with these point data by an orientation correction of the associated point data set or of the associated curve.

2. Method according to claim 1, **characterized in that** on the basis of the correction data determined in accordance with step iii), the accuracy of the relative position and orientation data of the sensor surface (4) is increased for subsequent observations.

3. Method according to claim 1 or 2, **characterized in that** to determine the relative change in the position and orientation of the sensor surface (4), a local measurement of accelerations and rotation rates of the same is used.

4. Method according to any one of claims 1 to 3, **characterized in that** known regularities of the solid body are used to restrict degrees of freedom of the position or orientation of the sensor surface (4) and in a further step, to eliminate redundant data or to minimize errors by averaging the same.

5. Method according to any one of claims 1 to 4, **characterized in that** distortions of the two-dimensional images due to the imaging method are detected and taken into account by calibration.

6. Method according to any one of claims 1 to 5, **characterized in that** characteristic identifiable features are filtered out of the recorded data and in order to determine the normal vectors, perspective-based distortions or changes in these distortions are used in the sighting from different locations and/or angular positions of at least one curve identifiable on the body surface or of point intervals between adjacent points.

7. Method according to claim 6, **characterized in that** at least parts of external body contours, differently coloured surface points or surface lines or differently coloured surface regions or surface region transitions or combinations of these features are used as characteristic features.

8. Method according to at least one of claims 6 or 7, **characterized in that** surface curves derived from reflection light intensity transitions and from self-shadows are used as characteristic features, wherein a local light intensity results from a shape and orientation of the body surface regions or due to their different surface roughness with respect to a lighting source.

9. Method according to any one of claims 1 to 8, **characterized in that** points or curve shapes are projected onto the body surface, wherein the projection results from patterns of light or shade, and the spatial position of at least three adjacent surface points is determined by triangulation in order to compute an orientation of the normal vectors.

10. Device (1) for mobile optical recording of selected surface data of at least one solid body or measurement object (6) and for carrying out the method according to any one of claims 1 to 9, having an image acquisition device with a light-sensitive sensor surface (4), at least one data processing device (11) and a data memory (13), **characterized in that** at least one device is provided for filtering two-dimensional images of at least one highlighted or prominent curve section (5, 5', 5") or point-like regions of the solid body or measurement object (6), and an algorithm is provided in the program code (12) of the at least one data processing device (11), so that the data processing device is configured
i) to determine vectors at least in identifiable identical curve points of at least two curves from different measurement times and different sufficiently coarse orientations and positions on the basis of the respective curve distortions, the orientation of said vectors being orthogonal to the associated surface increments around the points, and
ii) to form translational and rotational corrections for the position and orientation data by iterative minimization of distances and vector angular position errors of identical curve points of different recorded curves.

11. Device (1) according to claim 10, **characterized in that** an interface is provided, over which the corrected position and orientation data or the determined correction data can be output, which in the event of systematic input errors of the position and orientation data are taken into account as correction factors at subsequent measuring times before application of the algorithm.

12. Device (1) according to claim 10 or 11, **characterized in that** a difference-forming device or a differentiation device is provided in an image acquisition device or in the data processing device (11) to filter out image contents that remain constant over sequential image processing times or flat image contents, and only the content-related changes or surface contours are supplied to further processing, wherein because of the inertia of the sensor elements of the sensor surface and their movement relative to the measurement object (6), a multiple exposure can occur.

13. Device (1) according to any one of claims 10 to 12, **characterized in that** an interface (42) is provided for the input of position and orientation data of the sensor surface (4).

14. Device (1) according to claim 12 or 13, **characterized in that** an inertial sensor (9) is provided, which is rigidly connected to the image acquisition device and connected to an input interface, and the position and orientation data of which are used for the coarse determination of the position of the sensor surface (4) with respect to the measurement object (6).

15. Device (10) according to any one of claims 10 to 14, **characterized in that** a radiation source (16), in particular at least one laser light source, is provided for highlighting curve sections (5, 5', 5") or point-like regions thereof.

## Revendications

1. Procédé pour la saisie optique mobile de données de surface sélectionnées d'au moins un corps solide ou d'un objet de mesure (6) à l'aide de courbes de surface ou de parties ponctuelles de celles-ci et la combinaison géométrique-mathémathique de données pour déterminer des dimensions essentielles géométriques caractérisant le corps et/ou l'analyse de celles-ci en comparaison aux données théoriques par enregistrement séquentiel et traitement de représentations bidimensionnelles des données de surface sélectionnées sur une surface de détection sensible à la lumière (4), **caractérisé en ce que**
i) pour chaque point ou plusieurs points des courbes spatiales de surface un vecteur est déterminé, dont l'orientation est orthogonale sur une augmentation de surface située autour du point, et
ii) une position et une orientation de la surface de détection (4) par rapport au corps solide ou objet de mesure (6) au moment de la saisie de chaque représentation bidimensionnelle sont déterminées en précision grossière et servent au calcul de données tridimensionnelles grossières des points ou courbes saisis, et
iii) les points de courbe identiques sont déterminés à partir de positions et/ou orientations de saisie différentes à l'aide de cette position et orientation déterminée en précision grossière à partir des points les plus proches des données grossièrement positionnées ou réunies ou sont identifiés à l'aide de caractéristiques de courbe certaines des données de surface et sont itérativement rapprochés les uns des autres à partir des données de position et d'orientation grossièrement saisies, les distances entre les données de point d'un point identique étant minimisées en corrigeant la situation et les vecteurs normaux étant mis en parallèles par rotations des vecteurs normaux correspondant à ces données de point par une correction d'orientation du bloc de données de point correspondant ou de la courbe correspondante.

2. Procédé selon la revendication 1, **caractérisé en ce qu'**à l'aide des données de correction déterminées selon l'étape iii), une précision des données de position et d'orientation relatives de la surface de détection (4) est augmentée pour les saisies ultérieures.

3. Procédé selon la revendication 1 ou 2, **caractérisé en ce que** pour déterminer la modification relative de la position et de l'orientation de la surface de détection (4), on se sert d'une mesure des accélérations et des vitesses de rotation de celle-ci.

4. Procédé selon l'une quelconque des revendications 1 à 3, **caractérisé en ce que** les régularités connues du corps solide sont utilisées pour limiter le degré de liberté de position ou d'orientation de la surface de détection (4) et pour éliminer dans une autre étape des données redondantes ou pour minimiser des erreurs en faisant leur moyenne.

5. Procédé selon l'une quelconque des revendications 1 à 4, **caractérisé en ce que** des distorsions des représentations bidimensionnelles sont saisies et prises en considération par étalonnage sur la base de la méthode de reproduction.

6. Procédé selon l'une quelconque des revendications 1 à 5, **caractérisé en ce que** des caractéristiques particulières identifiables sont filtrées à partir des données saisies et pour la détermination des vecteurs normaux, on utilise des distorsions en perspective ou modifications de ces distorsions lors du ciblage à partir de lieux et/ou situations angulaires différents au moins d'une courbe identifiable sur la surface du corps ou des distances de points entre points adjacents.

7. Procédé selon la revendication 6, **caractérisé en ce que** l'on utilise comme caractéristiques particulières au moins des parties de contours extérieurs de corps, des points ou lignes de surface de couleurs différentes ou des zones de surface ou passages de zone de surface de couleur différente ou des combinaisons de ces caractéristiques.

8. Procédé selon au moins la revendication 6 ou 7, **caractérisé en ce que** des courbes de surface sont déterminées à partir des passages réflexion-intensité de lumière ainsi que des ombres propres en tant que caractéristiques particulières, une intensité de lumière locale résultant d'une forme et d'une orientation des zones de surface de corps ou en raison de la rugosité de surface différente de celles-ci par rapport à une source d'éclairage.

9. Procédé selon l'une quelconque des revendications 1 à 8, **caractérisé en ce que** des points ou formes de points sont projetés sur la surface de corps, la projection ayant lieu par jet de lumière ou d'ombre et la situation spatiale au moins de trois points de surface adjacents étant déterminée par triangulation pour calculer une orientation des vecteurs normaux.

10. Dispositif (1) pour la saisie optique mobile de données de surface sélectionnées au moins d'un corps solide ou d'un objet de mesure (6) et pour exécuter le procédé selon l'une quelconque des revendications 1 à 9, comprenant un dispositif d'enregistrement d'images avec une surface de détection (4) sensible à la lumière, au moins un dispositif de traitement des données (11) et une mémoire de données (13), **caractérisé en ce qu'** au moins un système est prévu à cet effet pour filtrer des représentations bidimensionnelles au moins d'une partie de courbe (5,5',5") marquée ou marquante ou parties ponctuelles du corps solide ou de l'objet de mesure (6) et un algorithme est prévu dans le code de programmation (12) au moins du dispositif de traitement des données (11) de telle sorte que le dispositif de traitement des données (11) est orienté,
i) pour déterminer des vecteurs au moins dans les points de courbe identifiables identiques d'au moins deux courbes à partir de moments de mesure différents et de situations d'orientation et de position différentes suffisamment grossières à l'aide des distorsions de courbe respectives, dont l'orientation est orthogonale sur les augmentations de surface correspondantes autour des points , et
ii) pour former des corrections de translation et de rotation pour les données de position et d'orientation par minimisation itérative des distances et des erreurs de situation angulaire vectorielles de points de courbe identiques des courbes saisies différentes.

11. Dispositif (1) selon la revendication 10, **caractérisé en ce qu'**une interface est prévue par le biais de laquelle les données de position et d'orientation corrigées ou les données de correction déterminées peuvent être éditées, lesquelles, en cas d'erreurs d'entrée systématiques des données de position et d'orientation, sont prises en compte de manière corrective aux moments de mesure ultérieurs avant utilisation de l'algorithme.

12. Dispositif (1) selon la revendication 10 ou 11, **caractérisé en ce qu'**un dispositif de formation de différence ou un dispositif de différenciation est prévu dans un système d'enregistrement d'images ou dans le dispositif de traitement des données (11) pour exfiltrer les contenus visuels permanents des moments de traitement d'images ou contenus visuels gauches et seules les modifications de contenu ou contours de surface sont acheminées vers un autre traitement, un éclairage multiple pouvant avoir lieu sur la base de l'inertie des éléments de détection de la surface de détection et du mouvement de ceux-ci par rapport à l'objet de mesure (6).

13. Dispositif (1) selon l'une quelconque des revendications 10 à 12, **caractérisé en ce qu'**une interface (42) est prévue pour l'introduction des données de position et d'orientation de la surface de détection (4).

14. Dispositif (1) selon la revendication 12 ou 13, **caractérisé en ce qu'** un capteur inertiel (9) est prévu en liaison rigide avec le dispositif d'enregistrement d'images, qui est raccordé à une interface d'entrée et les données de position et d'orientation de celui-ci servent à la détermination grossière de la situation de la surface de détection (4) par rapport à l'objet de mesure (6).

15. Dispositif (1) selon l'une quelconque des revendications 10 à 14, **caractérisé en ce qu'**une source de rayonnement (16) est prévue pour le marquage des parties de courbe (5,5',5") ou des parties ponctuelles de celles-ci, notamment au moins une source de lumière laser.
